(19) Europäisches Patentamt
European Patent Office
Office européen des brevets

(11) **EP 1 959 004 A1**

(12) **EUROPEAN PATENT APPLICATION**
published in accordance with Art. 158(3) EPC

(43) Date of publication:
**20.08.2008 Bulletin 2008/34**

(51) Int Cl.:
*C10M 169/04* (2006.01)    *B62D 5/04* (2006.01)
*C10M 149/14* (2006.01)    *F16H 57/04* (2006.01)
*C10N 20/06* (2006.01)    *C10N 30/00* (2006.01)
*C10N 30/08* (2006.01)    *C10N 40/04* (2006.01)
*C10N 50/10* (2006.01)    *C10N 70/00* (2006.01)

(21) Application number: **06832847.5**

(22) Date of filing: **17.11.2006**

(86) International application number:
**PCT/JP2006/322968**

(87) International publication number:
**WO 2007/063723 (07.06.2007 Gazette 2007/23)**

(84) Designated Contracting States:
**DE FR**

(30) Priority: **02.12.2005 JP 2005349523**

(71) Applicants:
• **JTEKT Corporation**
**Osaka-shi**
**Osaka 542-8502 (JP)**
• **Nippon Polyurethane Industry Co., Ltd.**
**Tokyo 108-0014 (JP)**

(72) Inventors:
• **KITAHATA, Kouji,**
**c/o JTEKT Corporation**
**Osaka-shi, Osaka 542-8502 (JP)**
• **UCHIDA, Naoki,**
**c/o JTEKT Corporation**
**Osaka-shi, Osaka 542-8502 (JP)**

• **YONEDA, Mitsuo,**
**c/o JTEKT Corporation**
**Osaka-shi, Osaka 542-8502 (JP)**
• **OKA, Hiroaki,**
**c/o JTEKT Corporation**
**Osaka-shi, Osaka 542-8502 (JP)**
• **NAKAGAWA, Tomotaka,**
**c/o JTEKT Corporation**
**Osaka-shi, Osaka 542-8502 (JP)**
• **HAYASHI, Masahiro,**
**c/o Nippon Polyurethane Industry Co., Ltd.**
**Yokohama-shi, Kanagawa 245-0052 (JP)**

(74) Representative: **Steil, Christian et al**
**Witte, Weller & Partner**
**Postfach 10 54 62**
**70047 Stuttgart (DE)**

(54) **LUBRICANT COMPOSITION, REDUCTION GEAR MAKING USE OF THE SAME AND ELECTRIC POWER STEERING APPARATUS MAKING USE OF THE SAME**

(57) There provided a lubricant composition that without any excess increase of the steering torque of an electric power steering apparatus and without any generation of sliding noise, reduces rattling sound thereby excel in the effect of noise reduction in automobile compartment, and is capable of favorably sustaining the above effect even when continuously used in high-temperature environment for a prolonged period of time; a speed reduction gear using the lubricant composition; and an electric power steering apparatus. The lubricant composition includes buffer particles of a polyurethane resin synthesized by reacting a polycarbonatepolyol, cross-linking agent having three or more active hydrogen groups per molecule and a polyisocyanate. The speed reduction gear (50) is filled with the lubricant composition. The electric power steering apparatus incorporates the speed reduction gear therein.

FIG. 2

EP 1 959 004 A1

**Description**

## TECHNICAL FIELD

The present invention relates to a lubricant composition, a speed reduction gear filled with the lubricant composition, and an electric power steering apparatus including the speed reduction gear.

## BACKGROUND ART

Electric power steering apparatuses for automobiles employ a speed reduction gear. In a column- type EPS , for example, the speed reduction gear transmits rotation of an electric motor from a small gear such as a worm to a large gear such as a worm wheel for reduction of a rotation speed and amplification of an output, and then applies the output to a steering shaft for torque assist of a steering operation. Proper backlash is required for engagement between the small gear and the large gear. However, if the backlash is excessively great, rattling sound occurs due to the backlash, for example, when the rotation of the gears is reversed or when a reaction force is inputted from tires during traveling on a bad road such as a stone pavement. If the rattling sound is transmitted as a noise to an automobile compartment, a driver has an uncomfortable feeling.

Therefore, a so-called by-layer assembly is conventionally employed in which a speed reduction gear is assembled by selecting a combination of a small gear and a large gear to provide proper backlash. However, the by-layer assembly is time-consuming, thereby failing to improve productivity in manufacturing the speed reduction gear. Further, even the by-layer assembly fails to eliminate variations in steering torque occurring due to off-center of a shaft of the worm wheel. Not only the speed reduction gear for the electric power steering apparatus but also a common speed reduction gear having a small gear and a large gear suffer from these problems.

To solve these problems, Patent Document 1 proposes a speed reduction gear for an electric power steering apparatus in which a worm shaft is displaceable toward a worm wheel, and backlash between the worm shaft and the worm wheel is virtually eliminated by resiliently displacing the worm shaft toward the worm wheel by a spring or the like. However, this arrangement complicates the construction of the speed reduction gear, thereby increasing production costs. Patent Documents 2 and 3 have proposed that a lubricant composition including buffer particles formed of rubber, soft resin or the like is filled in an area including at least the engaging portion of the small and large gears of the speed reduction gear. When the lubricant composition is used, the buffer particles are interposed between the tooth faces of the both gears to buffer the collision between the tooth faces, whereby rattling sound can be reduced without changing the structure of the speed reduction gear.

However, when the lubricant composition containing the buffer particles is used for the speed reduction gear including a combination of a worm shaft and a worm wheel in particular, there occurs a problem of increasing the steering torque of an electric power steering apparatus. Patent Document 4 has proposed that particles formed of a polyurethane resin synthesized by the reaction of a long-chain polyol having a number average molecular weight of 500 or more, a cross-linking agent having three or more active hydrogen groups per molecule and a polyisocyanate are used as buffer particles.

The elasticity and hardness of the buffer particles formed of the polyurethane resin can be adjusted in any given range by selecting the kinds and ratios of the components from which the polyurethane resin is produced. Hence, by filling the lubricant composition, containing the buffer particles formed of the polyurethane resin, and adjusted to have appropriate elasticity and hardness, in an area including the engaging portion of the small and large gears, rattling sound can be reduced even more effectively without increasing the steering torque of the electric power steering apparatus and without generating sliding noise, thereby avoiding increasing noise inside the automobile compartment.

Patent Document 1: JP-A1-2000-43739 (Paragraphs 0007 to 0009, FIG. 1)
Patent Document 2: JP-A1-2003-214529 (Claim 1, Paragraphs 0005 to 0006)
Patent Document 3: JP-A1-2004-162018 (Claim 1, Paragraph 0009)
Patent Document 4: JP-A1-2005-263989 (Claim 1, Paragraph 0010)

## DISCLOSURE OF THE INVENTION

## PROBLEM TO BE SOLVED BY THE INVENTION

However, according to a consideration conducted by the present inventors, the buffer particles formed of a polyurethane resin synthesized with a combination of an aromatic polyester polyol obtained by reacting an aromatic carboxylic acid with a low-molecular-weight polyol and an aliphatic polyester polyol obtained by reacting an aliphatic carboxylic acid with a low-molecular-weight polyol as long-chain polyols, which is used in the example of above-described Patent Document 4, are low in heat resistance and humidity resistance. When a lubricant composition containing the buffer particles is used continuously for a long period of time under a high temperature environment of approximately 120° C or more or used continuously for a long period of time under a high humidity environment, the polyurethane resin is hydrolyzed and the molecular weight decreases, whereby the modulus of elasticity of the buffer particles lowers. As the molecular weight decreases, the adherence increases; as a result, the buffer particles are apt to aggregate into clusters in the lubricant composition. Accordingly, the results reveal that the above-described effect may not be obtained sufficiently.

The present invention is intended to provide a lubricant composition that reduces rattling sound without excessively increasing the steering torque of an electric power steering apparatus and without generating sliding noise due to use of buffer particles so as to be excellent in the effect of reducing noise in an automobile compartment, and can favorably maintain the above-described effect even when the lubricant composition is used continuously for a long period of time under a high temperature environment and under a high humidity environment since the buffer particles are excellent in heat resistance and humidity resistance. In addition, the present invention is also intended to provide a speed reduction gear featuring low noise and having no risk of increasing the steering torque of the electric power steering apparatus even when used continuously for a long period of time under a high temperature environment and under a high humidity environment, and to provide an electric power steering apparatus using the speed reduction gear.

**MEANS FOR SOLVING THE PROBLEMS**

The present invention relates to a lubricant composition comprising a lubricant and buffer particles formed of a polyurethane resin synthesized by the reaction of:

   (1) polyols containing at least a polycarbonate polyol,
   (2) a cross-linking agent having three or more active hydrogen groups per molecule, and
   (3) a polyisocyanate.

According to a consideration conducted by the present inventors, the buffer particles formed of the polyurethane resin synthesized by using at least a polycarbonate polyol as a polyol have appropriate elasticity and hardness equivalent to those of the buffer particles formed of the polyurethane resin synthesized in combination of the aromatic polyester polyol and the aliphatic polyester polyol used in the example of Patent Document 4, and are excellent in heat resistance and humidity resistance in comparison with the conventional buffer particles. In particular, the modulus of elasticity of the buffer particles does not lower and the buffer particles do not aggregate into clusters even when the lubricant composition is used continuously for a long period of time under a high temperature environment of approximately 120° C or more or used continuously for a long period of time under a high humidity environment. Although the reasons for this are not clear, the present inventors conceive that the ester bonding in the aliphatic polyester polyol is in particular apt to be hydrolyzed under a high temperature environment or under a high humidity environment, and the molecular weight of the polyester resin decreases owing to the hydrolysis, whereby the modulus of elasticity of the buffer particles lowers, the adherence increases as the molecular weight decreases, and the buffer particles are apt to aggregate into clusters in the lubricant composition, whereas the hydrolysis hardly occurs in the polycarbonate polyol.

Accordingly, the lubricant composition of the present invention has a unique operational effect of reducing rattling sound without excessively increasing the steering torque of an electric power steering apparatus and without generating sliding noise due to the use of buffer particles so as to be excellent in the effect of reducing noise in an automobile compartment, and can favorably maintain the above-described effect even when the lubricant composition is used continuously for a long period of time under a high temperature environment and under a high humidity environment since the buffer particles are excellent in heat resistance and humidity resistance.

The fact that a polycarbonate polyol can be used as a polyol serving as a material of a polyurethane resin for forming buffer particles has also already been described in Patent Document 4 (Paragraphs 0017 and 0021). However, Patent Document 4 does not have any description that buffer particles have appropriate elasticity and hardness equivalent to those of the buffer particles used in the example of above-described Patent Document 4, and excellent in heat resistance and humidity resistance in comparison with the conventional buffer particles are obtained by using a polycarbonate polyol as a polyol serving as a material of the polyurethane resin, and that a lubricant composition having no risk of lowering the effect of reducing rattling sound described above even when being used for a long period of time under a high temperature environment and a high humidity environment are obtained by using the buffer particles. Therefore, the description of the polycarbonate polyol in Patent Document 4 does not disclose or suggest the present invention.

In the present invention, it is preferable that a polycarbonate polyol and an aromatic polyester polyol are used in combination as polyols serving as materials of the polyurethane resin for forming the buffer particles, and a weight ratio $P_A/P_B$ of the polycarbonate polyol $P_A$ to the aromatic polyester polyol $P_B$ is 40/60 or more. Hence, the effect of reducing rattling sound can be more favorably maintained without excessively increasing the steering torque of an electric power steering apparatus and without generating sliding noise when the buffer particles are used continuously for a long period of time under a high temperature environment and under a high humidity environment.

In addition, in the present invention, it is preferable that all the polyols serving as materials of the polyurethane resin containing the polycarbonate polyol are long-chain polyols having a number average molecular weight of 500 or more. Hence, the buffer particles can be provided with appropriate elasticity and hardness. Furthermore, in the present invention, it is preferable that a cross-linking agent L and a polyol P serving as materials of the polyurethane resin are blended at a molar ratio L/P of 0.5/1 to 3/1. Hence, the elasticity and hardness of the buffer particles are further preferably balanced, and the effect of reducing rattling sound can be further improved without increasing the steering torque of an electric power steering apparatus and without generating sliding noise.

Moreover, in the present invention, it is preferable that the buffer particles are spherical particles of the polyurethane resin formed by reacting the polyols, the cross-linking agent and the polyisocyanate dispersed in a nonaqueous dispersion medium. In such a case, the fluidity of the lubricant composition is improved, and it further allows to securely prevent the steering torque of the electric power steering apparatus from increasing. Besides, the production method is advantageous in order to produce spherical buffer particles having a uniform particle diameter efficiently.

Since the speed reduction gear of the present invention includes a small gear and a large gear and the lubricant composition of the present invention is filled in an area including an engaging portion of the both gears, the speed reduction gear is preferable in respect of low noise and no risk of increasing the steering torque of the electric power steering apparatus even when the speed reduction gear is used continuously for a long period of time under a high temperature environment in particular. Still further, since the electric power steering apparatus of the present invention transmits an output of an electric motor for steering assist to a steering mechanism via the speed reduction gear, the electric power steering apparatus is preferable in that noise in an automobile compartment can be reduced at low cost.

## EFFECTS OF THE INVENTION

The present invention can provide a lubricant composition capable of reducing rattling sound without excessively increasing the steering torque of an electric power steering apparatus and without generating sliding noise due to the use of buffer particles so as to be excellent in the effect of reducing noise in an automobile compartment, and capable of favorably maintaining the above-described effect even when the lubricant composition is used continuously for a long period of time under a high temperature environment and under a high humidity environment, since the buffer particles are excellent in heat resistance and humidity resistance. Furthermore, the present invention can provide a speed reduction gear with low noise as well as no risk of increasing the steering torque of an electric power steering apparatus even when the reduction gear is used for a long period of time under a high temperature environment and under a high humidity environment, and also provides an electric power steering apparatus using the speed reduction gear.

## BRIEF DESCRIPTION OF THE DRAWINGS

FIG. 1 is a schematic sectional view showing an electric power steering apparatus according to one embodiment of the present invention.

FIG. 2 is a cross-sectional view taken along a line II-II of FIG. 1.

FIG. 3 is a sectional view illustrating a method for measuring the modulus of elasticity of buffer particles in Examples and Comparative Examples.

FIG. 4 is a graph showing the change in the modulus of elasticity of the buffer particles measured by using the method illustrated in FIG. 3 depending on measurement temperature.

A:      engaging portion
M:      motor
11:     worm shaft (small gear)
12:     worm wheel (large gear)
50:     speed reduction gear

**EMBODIMENTS OF THE INVENTION**

<Lubricant composition>

The lubricant composition of the present invention contains a lubricant and buffer particles formed of a polyurethane resin synthesized by the reaction of:

(1) polyols containing at least a polycarbonate polyol,
(2) a cross-linking agent having three or more active hydrogen groups per molecule, and
(3) a polyisocyanate.

Since the buffer particles of the lubricant composition according to the present invention are formed of a polyurethane resin synthesized with at least a polycarbonate polyol as polyols, the lubricant composition has a unique operational effect of reducing rattling sound without excessively increasing the steering torque of an electric power steering apparatus and without generating sliding noise due to the use of the buffer particles so as to be excellent in the effect of reducing noise in an automobile compartment, and can favorably maintain the above-described effect even when the lubricant composition is used continuously for a long period of time under a high temperature environment and under a high humidity environment since the above-described buffer particles are excellent in heat resistance and humidity resistance.

Among the polyols (1), examples of the polycarbonate polyol may include a polycarbonate polyol synthesized by dealcoholization reaction or dephenolation reaction of a low-molecular-weight polyol with ethylene carbonate, diethyl carbonate, diphenyl carbonate, and the like, and having two or more active hydrogen groups per molecule on average. Although the polycarbonate polyol may be used independently as a polyol, it is preferable that the polycarbonate polyol is used in combination with an aromatic polyester polyol. Examples of the aromatic polyester polyol may include an aromatic polyester polyol synthesized by the reaction of a low-molecular-weight polyol with an aromatic carboxylic acid and having one or more active hydrogen groups per molecule on average.

When the polycarbonate polyol and the aromatic polyester polyol are used in combination as polyols serving as raw materials of the polyurethane resin, the rigidity of the synthesized polyurethane resin is increased, and buffer particles having proper elasticity can be obtained securely. In the above-described combination, it is preferable that the weight ratio $P_A/P_B$ of the polycarbonate polyol $P_A$ to the aromatic polyester polyol $P_B$ should be 40/60 or more, and it is further preferable that the ratio $P_A/P_B$ should be 60/40 or more. If the ratio of the polycarbonate polyol $P_A$ is less than the range, the heat resistance and humidity resistance of the buffer particles are lowered, and the effect of reducing rattling sound without excessively increasing the steering torque of an electric power steering apparatus and without generating sliding noise may not be favorably maintained when the buffer particles are used continuously for a long period of time under a high temperature environment and under a high humidity environment.

The upper limit of the ratio of the polycarbonate polyol $P_A$ to the aromatic polyester polyol $P_B$ is not limited in particular, and the polycarbonate polyol can be used independently as a polyol. However, in consideration of fully producing the above-described effect due to the combination of the polycarbonate polyol and the aromatic polyester polyol, in the combination of the two polyols, it is further preferable that the ratio $P_A/P_B$ of the polycarbonate polyol $P_A$ to the aromatic polyester polyol $P_B$ should be 95/5 or less in the range.

Even in the above-described range, it is preferable that the weight ratio $P_A/P_B$ of the polycarbonate polyol $P_A$ to the aromatic polyester polyol $P_B$ should be 80/20 or more in particular. If the weight ratio $P_A/P_B$ of the two polyols is in the range, the crystallinity of the polyurethane resin for forming the buffer particles is prevented from rising excessively while the heat resistance and humidity resistance of the buffer particles are maintained, and the glass transition temperature Tg thereof is controlled in a range as low as possible, whereby the modulus of elasticity of the buffer particles is improved under an ordinary environment at a temperature in the range of, for example, -20° C or more to less than the thermal decomposition temperature, and any abrupt increase in the modulus of elasticity can be suppressed under a low-temperature environment of less than the above-described temperature range. Hence, the buffer particles can be provided with favorable elasticity and hardness in a wider temperature range, whereby the effect of reducing rattling sound can be further improved without increasing the steering torque of an electric power steering apparatus and without generating sliding noise.

It is preferable that all the polyols serving as the raw materials of the polyurethane resin containing at least a polycarbonate polyol should be long-chain polyols having a number average molecular weight of 500 or more. Hence, the buffer particles can be provided with appropriate elasticity and hardness. Although the upper limit of the number average molecular weights of the polyols is not limited in particular, when spherical buffer particles are produced by means of the so-called dispersion polymerization method wherein polyols, a cross-linking agent and a polyisocyanate are reacted while dispersed in a nonaqueous dispersion medium, for example, as described above, it is preferable that the number average molecular weights of the polyols should be 5000 or less so that the polyols are dispersed in the dispersion medium in a shape as uniformly spherical as possible.

Examples of low-molecular-weight polyols being used as the above-described polyols may include low-molecular-weight polyols having no cationic group in the molecule, such as ethylene glycol, 1,2-propanediol, 1,3-propanediol, 1,2-butanediol, 1,3-butanediol, 1,4-butanediol, 1,5-pentanediol, 1,6-hexanediol, 2-methyl-1,5-pentanediol, 3-methyl-1,5-pentanediol, neopentyl glycol, 1,8-octanediol, 1,9-nonanediol, decamethylene glycol, diethylene glycol, dipropylene glycol, 2,2-diethyl-1,3-propanediol, 2-n-butyl-2-ethyl-1,3-propanediol, 2,2,4-trimethyl-1,3-pentanediol, 2-ethyl-1,3-hexanediol, 2-n-hexadecane-1,2-ethylene glycol, 2-n-eicosane-1,2-ethylene glycol, 2-n-octacosane-1,2-ethylene glycol, cyclohexane-1,4-diol, cyclohexane-1,4-dimethanol, 3-hydroxy-2,2-dimethylpropyl-3-hydroxy-2,2-dimethyl propionate, dimer acid diol, bisphenol A, hydrogenated bisphenol A, ethylene oxide adducts or propylene oxide adducts of bisphenol A, ethylene oxide adducts or propylene oxide adducts of hydrogenated bisphenol A, trimethylolpropane, glycerin, hexanetriol, quodorole, pentaerythritol, and solbitol.

Furthermore, examples of low-molecular-weight polyols may include low-molecular-weight polyols containing -COOH groups, such as 2,2-dimethylol propionic acid and 2,2-dimethylol butanoic acid; salts of low-molecular-weight polyols containing -COOH groups with ammonia, organic amine, alkaline metal, alkaline earth metal, and the like; low-molecular-weight polyols containing sulfonic acid groups, such as 2-sulfo-1,3-propanediol, 2-sulfo-1,4-butanediol, and the like; and salts of low-molecular-weight polyols containing sulfonic acid groups with ammonia, organic amine, alkaline metal, alkaline earth metal, and the like. As the low-molecular-weight polyols, one kind of the above-described compounds may be used independently or two or more kinds thereof can be used in combination.

Examples of an aromatic carboxylic acid for forming an aromatic polyester polyol together with a low-molecular-weight polyol may include one or two or more kinds of compounds, such as polycarboxylic acids having no cationic group in the molecule, such as phthalic acid, isophthalic acid, terephthalic acid, naphthalenedicarboxylic acid, trimellitic acid, and pyromellitic acid; polycarboxylic acids containing sulfonic acid groups, such as 5-sulfo-isophthalic acid; salts of polycarboxylic acids containing sulfonic acid groups with ammonia, organic amine, alkaline metal, alkaline earth metal, and the like; acid anhydrides, acid halides, alkyl esters, and the like, of the above-described polycarboxylic acids or polycarboxylic acids containing sulfonic acid groups.

As polyols, other polyols can also be added to the extent that the above-described effect is not impaired by the use of at least a polycarbonate polyol or the combination of the polycarbonate polyol and aromatic polyester polyol. Examples of the other polyols may include aliphatic polyester polyol, polyamide ester polyol, polyether polyol, polyether esterpolyol, polyolefinpolyol, plant/animalpolyol, dimeracid polyol and hydrogenated dimer acid polyol, each having one or more active hydrogen groups per molecule on average. It is preferable that the above-described various polyols have a number average molecular weight of 500 or more because of the reasons described above.

The cross-linking agent (2), which is used together with polyols to form the polyurethane resin from which the buffer particles are formed, introduces a three-dimensional cross-linking structure in the polyurethane resin to impart appropriate elasticity and hardness for the buffer particles. As the above-described cross-linking agent, various compounds having three or more hydrogen groups per molecule and preferably having a number average molecular weight of less than 500 are taken as examples. Examples of the cross-linking agent may include polyols, such as glycerin, sorbitol, trimethylol propane, trimethylol butane, trimethylol ethane, 1,2,6-hexanetriol and pentaerythritol, or amino alcohols, such as triethanolamine, diethanolamine and N,N,N',N'-tetra(hydroxypropyl)diamine, preferably trimethylol propane or trimethylol butane in which all the active hydrogen groups are primary hydroxyl groups in particular.

It is preferable that the cross-linking agent L and the polyol P should be blended at a molar ratio L/P of 0.5/1 to 3/1. If the ratio of the cross-linking agent is less than the range, the three-dimensional cross-linking structure introduced in the polyurethane resin is excessively coarse, and the buffer particles are excessively softened. Accordingly, the effect of reducing speed reduction gear noise may not obtained. Furthermore, if the ratio of the cross-linking agent is more than the range, the three-dimensional cross-linking structure introduced in the polyurethane resin is excessively dense, the buffer particles are excessively hard, whereby the particles generate resistance in the engaging portion. As a result, the steering torque of the electric power steering apparatus may increase excessively and sliding noise may be generated.

As the polyisocyanate (3), which is used together with the polyols and the cross-linking agent to form the polyurethane resin from which the buffer particles are formed, various compounds having at least two isocyanate groups per molecule can be used. Examples of the polyisocyanate may include aromatic diisocyanates, such as tolylenediisocyanate, xylylenediisocyanate and 4,4'-diphenylmethane diisocyanate; aliphatic diisocyanates, such as 1,6-hexamethylene diisocyanate and 1,12-dodecane diisocyanate; and alicyclic diisocyanates, such as cyclohexane-1,4-diisocyanate and isophorone diisocyanate.

In addition, examples of the polyisocyanate may include isocyanate-end compounds obtained by the reaction of the respective polyisocyanates and compounds having active hydrogen groups; denatured isocyanates obtained by carbodiimide reaction, isocyanurate reaction and the like; and phosgenized aniline-formaldehyde condensates. Furthermore, it is possible to use a polyisocyanate, part or whole of which is stabilized using an appropriate blocking agent having one active hydrogen group per molecule, such as methanol, n-butanol, benzyl alcohol, e-caprolactam, methyl ethyl ketone oxime, phenol and cresol.

The blending ratio of the polyisocyanate should only be set so that the equivalent of the isocyanate group is nearly equal to the total of the equivalent of the active hydrogen groups of the polyol and the equivalent of the active hydrogen groups of the cross-linking agent. More specifically, it is preferable that the blending ratio of the polyisocyanate should be set so that the equivalent of the isocyanate group is approximately 0.9 to 1.1 times as large as the total of the equivalents of the active hydrogen groups of the polyol and the cross-linking agent.

Various additives can be contained as necessary in the buffer particles formed of the polyurethane resin synthesized by the reaction of the above-described components. Examples of the additives may include an antioxidant, antiaging agent and fire retardant for preventing deterioration in the polyurethane resin, magnetic powder for magnetizing the buffer particles, and a coloring agent for coloring the particles.

It is preferable that the average particle diameter $D_1$ of the buffer particles in terms of volume fraction should be 50 $\mu$m < $D_1$ = 300 $\mu$m. If the average particle diameter $D_1$ in terms of volume fraction is less than 50 $\mu$m, the effect of shock-absorbing the engaging between the small and large gears, so that reducing rattling sound is limited, and noise in an automobile compartment may not be reduced significantly. Furthermore, if the average particle diameter $D_1$ in terms of volume fraction is more than 300 $\mu$m, the steering torque of the electric power steering apparatus may increase and sliding noise may be generated. In consideration of further improving the effect of reducing rattling sound, it is preferable that the average particle diameter of the buffer particles in terms of volume fraction should be 100 $\mu$m or more in the range in particular. Moreover, in consideration of more securely preventing the increase in the steering torque and the generation of sliding noise, it is preferable that the diameter should be 200 $\mu$m or less in the range in particular.

Although the buffer particles can be produced by means of various methods, when the dispersion polymerization method wherein polyols, a cross-linking agent and a polyisocyanate are reacted while dispersed in a nonaqueous dispersion medium is used, buffer particles dispersed in the dispersion medium can be produced efficiently while the spherical shape thereof is maintained and having a uniform particle diameter. As the dispersion medium, various nonaqueous organic solvents that do not dissolve at least the polyols and the polyurethane resin generated by the reaction can be used. Specific examples thereof may include aliphatic hydrocarbons, such as n-hexane, isooctane, dodecane and liquid paraffin; and alicyclic hydrocarbons, such as cyclohexane. In particular, in consideration of heating during the reaction, a dispersion medium having a boiling point of 60° C or more is preferable. Furthermore, a polar solvent, such as toluene, butyl acetate and methyl ethyl ketone, may also be used in combination as a dispersion medium as necessary.

A catalyst may also be added to the reaction system to accelerate urethanization as necessary. Examples of the catalyst may include di-n-butyltin dilaurate, primary tin octoate, tertiary amines (N-methyl morpholine, triethylamine, and the like.), lead naphthenate and lead octoate. It is preferable that the amount of the catalyst is approximately 0.01 to 1 part by weight for the total 100 parts by weight of the polyol, cross-linking agent and polyisocyanate.

A dispersion stabilizer may also be added to the reaction system to stably disperse the components, such as the polyols, in a nonaqueous dispersion medium. As the dispersion stabilizer, various dispersion stabilizers (surfactant) can be used. Examples of a preferable dispersion stabilizer may include a compound obtained by reacting 100 parts by weight of polyester polyol or polycarbonate polyol having an unsaturated bond per molecule with 20 to 400 parts by weight of an ethylene-unsaturated monomer having a side chain composed of a hydrocarbon group having six or more carbon atoms. It is preferable that approximately 1 to 30 parts by weight of the dispersion stabilizer should be contained in the total 100 parts by weight of the polyols, cross-linking agent and polyisocyanate.

Various known conventional emulsification apparatuses and the like can be used to carry out the dispersion polymerization method. Although an appropriate procedure can be selected as a procedure for supplying various components, it is preferable that the supplying order should be carried out using the procedure described below. That is, polyols and a dispersion medium are supplied into a reaction vessel of an apparatus, a dispersion stabilizer is added, and the mixture is stirred so that the polyols are dispersed into a spherical form in the dispersion medium, and then a catalyst and a polyisocyanate are added into the dispersion. The generation of a polyurethane resin by the reaction of the polyols and the polyisocyanate proceeds; when the chain length of the polyurethane resin has reached a predetermined value, a cross-linking agent is added to cross-link the polyurethane resin, and buffer particles are produced. The chain length of the polyurethane resin can be obtained by carrying out titration to determine the concentration of the end isocyanate group of the polyurethane resin that is sampled from the vessel.

In the above-described dispersion polymerization method, for the adjustment of the average particle diameter of the buffer particles in terms of volume fraction into the range described above, stirring conditions (stirring speed, temperature, and the like.) should only be adjusted, the kind and amount of the dispersion stabilizer should only be selected, and the kind and amount of the dispersion medium should only be selected. Furthermore, for the addition of the above-described additives to the buffer particles produced by means of the dispersion polymerization method, the additives should only be blended into the polyols used for polymerization, for example.

It is preferable that the content of the buffer particles should be 5 to 50 wt% of the total amount of the lubricant composition. If the content is less than the range, the effect may not be obtained efficiently to reduce noise in an automobile compartment by absorbing shock using the buffer particles interposed between the small and large gears and thereby reducing rattling sound. Furthermore, if the content is more than the range, the steering torque of an electric power steering apparatus increases and sliding noise is generated, and noise in the automobile compartment may increase. In consideration of further improving the effect of reducing rattling sound, it is preferable that the content of the buffer particles should be 15 wt% or more in particular even in the range.

As a lubricant in which the buffer particles are dispersed, either a liquid lubricating oil or a semisolid grease may be used. As the lubricating oil, it is preferable that a lubricating oil having a kinematic viscosity of 5 to 200 mm$^2$/s (at 40° C), further preferably 20 to 100 mm$^2$/s (at 40° C) in particular, should be used. As the lubricating oil, a synthetic hydrocarbon oil (for example, poly (a-olefin) oil) is preferable; however, a mineral oil; or a synthetic oil, such as silicone oil, fluorine oil, ester oil and ether oil can also be used. The respective lubricating oils can be used independently, but two or more kinds thereof may be used in combination. To the lubricating oil, a solid lubricant (molybdenum disulfide, graphite, PTFE, and the like); a phosphorus or sulfur extreme-pressure additive; an antioxidant, such as tributyl phenol or methyl phenol; an antirust agent; a metal inactivator; a viscosity index improver; an oily agent; and the like, may also be added as necessary.

As a grease, it is preferable to use a grease serving as lubricant compositions to which buffer particles are added and whose consistency represented by the NLGI (National Lubricating Grease Institute) numbers are No. 2 to No. 000, further preferably No. 2 to No. 00 in particular. The grease is formed by adding a thickening agent to lubricant base oil as in the conventional greases. As the lubricant base oil, a synthetic hydrocarbon oil (for example, poly (a-olefin) oil) is preferable; however, a mineral oil; or a synthetic oil, such as silicone oil, fluorine oil, ester oil and ether oil can also be used. It is preferable that the kinematic viscosity of the lubricant base oil should be 5 to 200 mm$^2$/s (at 40° C), further preferably 20 to 100 mm$^2$/s (at 40°C) in particular. As the thickening agent, various known conventional thickening agents (soap and non-soap agents) can be used. To the grease, a solid lubricant (molybdenum disulfide, graphite, PTFE, and the like.); a phosphorus or sulfur extreme-pressure additive; an antioxidant, such as tributyl phenol or methyl phenol; an antirust agent; a metal inactivator; a viscosity index improver; an oily agent; and the like, may also be added as necessary.

<Speed Reduction Gear and Electric Power Steering Apparatus>

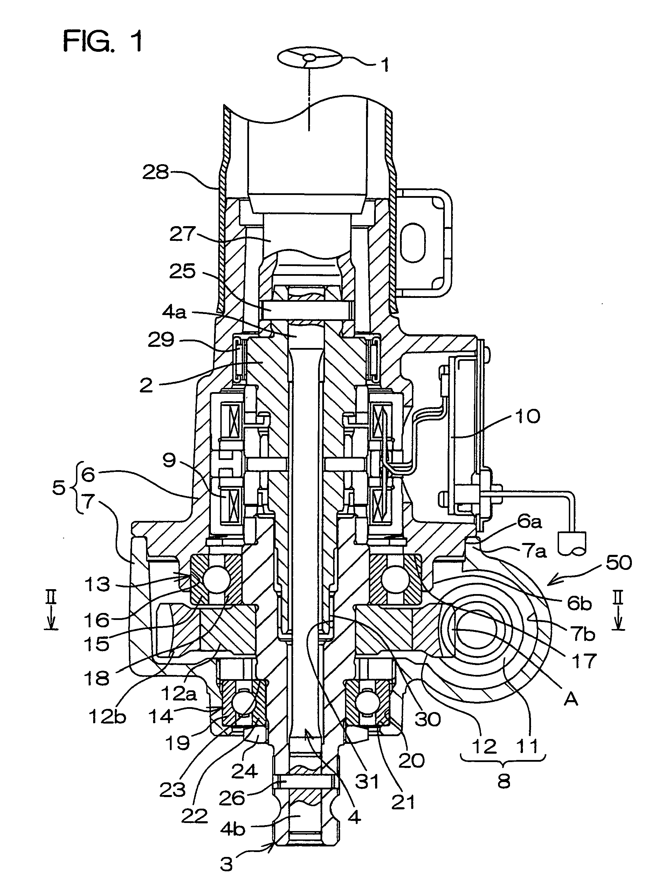

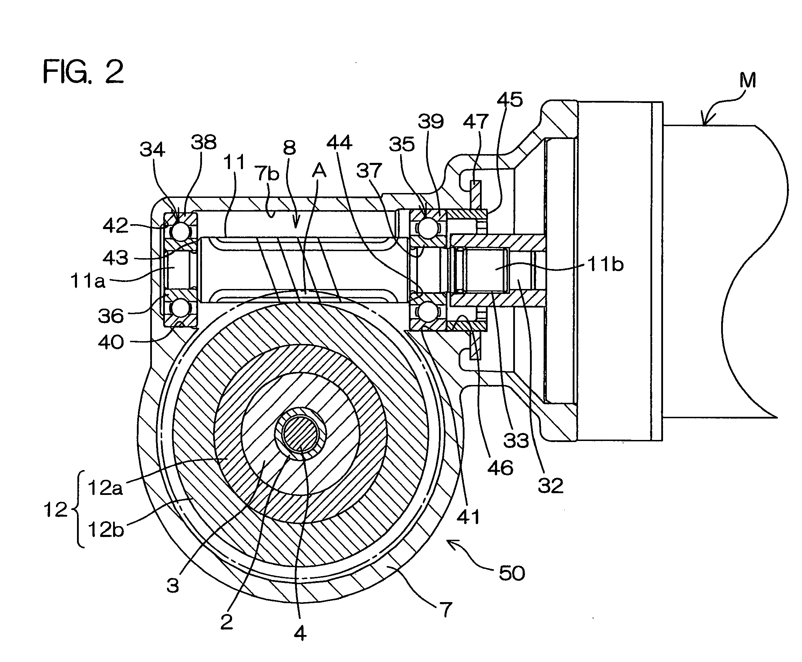

Fig. 1 is a schematic sectional view of an electric power steering apparatus according to one embodiment of the present invention. Fig. 2 is a sectional view taken along a line II-II in Fig. 1. Referring to Fig. 1, in the electric power steering apparatus according to this embodiment, a first steering shaft 2 serving as an input shaft to which a steering wheel 1 is attached and a second steering shaft 3 serving as an output shaft connected to a steering mechanism (not shown) such as a rack-and-pinion mechanism are coaxially connected to each other through a torsion bar 4.

A housing 5 which supports the first and second steering shafts 2 and 3 is composed of an aluminum alloy, for example, and attached to an automobile body (not shown). The housing 5 includes a sensor housing 6 and a gear housing 7 which are fitted to each other. Specifically, the gear housing 7 has a cylindrical shape, and an annular flange 7a at its upper end is fitted in an annular peripheral step 6a at a lower end of the sensor housing 6. The gear housing 7 accommodates a worm gear mechanism 8 serving as a speed reduction gear mechanism, and the sensor housing 6 accommodates a torque sensor 9, a control board 10, and so on. A speed reduction gear 50 is configured by accommodating the worm gear mechanism 8 in the gear housing 7.

The worm gear mechanism 8 includes a worm wheel 12 which is rotatable integrally with an axially intermediate portion of the second steering shaft 3 and is restricted in its axial movement, and a worm shaft 11 (see Fig. 2) which is meshed with the worm wheel 12 and connected to a rotating shaft 32 of an electric motor M through a spline joint 33. The worm wheel 12 includes an annular metal core 12a integrally rotatably coupled to the second steering shaft 3, and a synthetic resin member 12b having teeth provided on its outer peripheral surface as surrounding the metal core 12a. The metal core 12a is inserted in a mold, for example, when the synthetic resin member 12b is molded. The core metal 12a and the synthetic resin member 12b are combined and integrated by molding the synthetic resin member 12b with the metal core 12a inserted. The second steering shaft 3 is rotatably supported by first and second rolling bearings 13 and 14 which are arranged axially of the second steering shaft 3 with the worm wheel 12 vertically interposed therebetween.

An outer ring 15 of the first rolling bearing 13 is fitted in a bearing holding hole 16 provided inside a cylindrical projection 6b at a lower end of the sensor housing 6 and held therein. An upper end surface of the outer ring 15 abuts against an annular step 17, so that axial upward movement of the outer ring 15 relative to the sensor housing 6 is restricted. On the other hand, an inner ring 18 of the first rolling bearing 13 is fitted around the second steering shaft 3 byway of interference fit. A lower end surface of the inner ring 18 abuts against an upper end surface of the metal core 12a of the worm wheel 12.

An outer ring 19 of the second rolling bearing 14 is fitted in a bearing holding hole 20 of the gear housing 7 and is held therein. A lower end surface of the outer ring 19 abuts against an annular step 21, so that axial downward movement of the outer ring 19 relative to the gear housing 7 is restricted. On the other hand, an inner ring 22 of the

second rolling bearing 14 is integrally rotatably attached to the second steering shaft 3 and is restricted in its relative axial movement. The inner ring 22 is held between a step 23 of the second steering shaft 3 and a nut 24 tightened around a thread portion of the second steering shaft 3.

**[0051]** The torsion bar 4 extends through the first and second steering shafts 2 and 3. An upper end 4a of the torsion bar 4 is integrally rotatably connected to the first steering shaft 2 by a connection pin 25, and a lower end 4b of the torsion bar 4 is integrally rotatably connected to the second steering shaft 3 by a connection pin 26. A lower end of the second steering shaft 3 is connected to the steering mechanism such as a rack-and-pinion mechanism, as described above, through an intermediate shaft not shown. The connection pin 25 connects a third steering shaft 27 disposed coaxially with the first steering shaft 2 to the first steering shaft 2 in an integrally rotatable manner. The third steering shaft 27 extends through a tube 28 serving as a steering column.

**[0052]** An upper part of the first steering shaft 2 is rotatably supported by the sensor housing 6 via a third rolling bearing 29 such as of a needle roller bearing. A reduced diameter portion 30 of a lower part of the first steering shaft 2 is fitted in a hole 31 of an upper part of the second steering shaft 3 with predetermined play provided in the direction of the rotation, so that relative rotation of the first and second steering shafts 2 and 3 is restricted within a predefined range.

**[0053]** Referring to Fig. 2, the worm shaft 11 is rotatably supported by fourth and fifth rolling bearings 34 and 35 held by the gear housing 7. Inner rings 36 and 37 of the fourth and fifth rolling bearings 34 and 35 are respectively fitted around constricted portions of the worm shaft 11. Outer rings 38 and 39 are respectively held in bearing holding holes 40 and 41 of the gear housing 7. The gear housing 7 includes a portion 7b radially opposed to a part of a peripheral surface of the worm shaft 11.

**[0054]** The outer ring 38 of the fourth rolling bearing 34, which supports one end 11a of the worm shaft 11 is positioned in abutment against a step 42 of the gear housing 7. On the other hand, the inner ring 36 abuts against a positioning step 43 of the worm shaft 11, thereby restricting movement thereof toward the other end 11b.

The inner ring 37 of the fifth rolling bearing 35, which supports a portion of the worm shaft 11 adjacent to the other end 11b (an end on the side of the joint) abuts against a positioning step 44 of the worm shaft 11, thereby restricting the movement thereof toward the one end 11a.

**[0055]** The outer ring 39 is urged toward the fourth rolling bearing 34 by a screw member 45 for preload adjustment. The screw member 45 is screwed into a screw hole 46 formed in the gear housing 7, thereby preloading the pair of rolling bearings 34 and 35 and axially positioning the worm shaft 11. A reference numeral 47 denotes a lock nut which is engaged with the screw member 45 in order to fasten the screw member 45 after the preload adjustment.

**[0056]** In the gear housing 7, the lubricant composition of the present invention containing the aforementioned minute particles dispersed therein is filled in a region including at least an engaging portion A of the worm shaft 11 and the worm wheel 12. That is, the lubricant composition may be filled only in the engaging portion A, in the engaging portion A and the entire peripheral portion of the worm shaft 11, or in the entire gear housing 7. The present invention is not limited to the embodiment shown in Figs. 1 and 2. The construction of the speed reduction gear according to the present invention is applicable to speed reduction gears for apparatuses other than the electric power steering apparatus, and various modifications may be made within the scope of the present invention defined by the claims.

## EXAMPLES

<Production of buffer particles>

(Example 1)

**[0057]** As a polycarbonate polyol,hexamethylene glycol/carbonate ester (number average molecular weight Mn = 2000, hydroxyl value 56) synthesized by the dealcoholization reaction of hexamethylene glycol and diethyl carbonate was used. In an 1-litter flask which replaced internal air with nitrogen, 742 g of the polycarbonate polyol, 995 g of isooctane serving as a dispersion medium and 25 g of a dispersion stabilizer [N-5741 produced by Nippon Polyurethane Industry Co., Ltd.] were supplied.

**[0058]** Stirring was started, and while the polycarbonate polyol was dispersed in the isooctane, 0.005 g of di-n-butyltin dilaurate [U-600 produced by Nippon Polyurethane Industry Co., Ltd.] serving as a catalyst was added; furthermore, 187 g of hexamethylene diisocyanate serving as a polyisocyanate was added, and the mixture was reacted for 3 hours at 80 to 90° C.

**[0059]** Then, the reaction solution was analyzed sequentially, and when the concentration of the end isocyanate group reached 3.2%, 66 g of trimethylol propane (corresponding to the molar ratio L/P of the number of moles L of the trimethylol propane to the number of moles P of the polycarbonate polyol was equal to 2/1) serving as a cross-linking agent was added; after the mixture was reacted for a further 3 hours at 80 to 90°C, the solid content was filtered and dried; then, 5 g of a silica dusting powder was mixed uniformly to produce 1000 g of buffer particles formed of a polyurethane resin.

**[0060]** The average particle diameter of the buffer particles in terms of volume fraction was 150 μm, and the particle

size distribution thereof was 40 to 300 μm with a laser diffraction particle size analyzer [Microtrack (registered trademark) produced by Nikkiso Co., Ltd.]. Furthermore, the physical properties of the polyurethane resin sheet (approximately 2 mm in thickness) produced by applying the same blend excluding the dispersion stabilizer were measured at a measurement temperature of 25° C; the shore A hardness; $H_A$ was 72, the elongation at break; EB was 300% and the tensile strength at break; TB was 30 MFa, according to the measurement method described in the "Physical testing method for vulcanized rubber" in Japanese Industrial Standard JIS K6301: 1995. In order to form the polyurethane resin sheet, the mixture of the components excluding the dispersion medium and the dispersion stabilizer was poured into a dish-shaped vessel made of iron, heated to 90° C so as to be cured, and then aged at the same temperature. The glass transition temperature; Tg was -28°C.

(Example 2)

As a polycarbonate polyol, the same polyol as used in Example 1 was used. Furthermore, as an aromatic polyester polyol, hexamethylene glycol/phthalic acid ester (number average molecular weight Mn = 1000, hydroxyl value 112) was added. Then, 1000 g of buffer particles formed of a polyurethane resin was produced in a similar way described in Example 1 except that as polyols, 607 g of the polycarbonate polyol and 107 g of the aromatic polyester polyol were blended, and except that the blending amount of the dispersion stabilizer [N-5741 produced by Nippon Polyurethane Industry Co., Ltd. ] was 24 g, the blending amount of hexamethylene diisocyanate serving as a polyisocyanate was 207 g, and the blending amount of trimethylol propane serving as a cross-linking agent was 73 g (corresponding to the molar ratio L/P of the number of moles L of the trimethylol propane to the total number of moles P of the two polyols was equal to 2/1). The weight ratio $P_A/P_B$ of the polycarbonate polyol $P_A$ to the aromatic polyester polyol $P_B$ was 85/15. The trimethylol propane serving as a cross-linking agent was added when the concentration of the end isocyanate group reached 3.6%.
The average particle diameter of the buffer particles in terms of volume fraction was 150 μm and the particle size distribution thereof was 40 to 300 μm with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 70, the elongation at break; EB was 300%, and the tensile strength at break; TB was 32 MPa. The glass transition temperature; Tg was -35°C.

(Example 3)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 482 g of the polycarbonate polyol and 207 g of the aromatic polyester polyol were blended, and except that the blending amount of the dispersion stabilizer [N-5741 produced by Nippon Polyurethane Industry Co., Ltd.] was 23 g, the blending amount of hexamethylene diisocyanate serving as a polyisocyanate was 226 g, and the blending amount of trimethylol propane serving as a cross-linking agent was 80 g (corresponding to the molar ratio L/P of the number of moles L of the trimethylol propane to the total number of moles P of the two polyols was equal to 2/1). The weight ratio $P_A/P_B$ of the polycarbonate polyol $P_A$ to the aromatic polyester polyol $P_B$ was 70/30. The trimethylol propane serving as a cross-linking agent was added when the concentration of the end isocyanate group reached 3.9%.
The average particle diameter of the buffer particles in terms of volume fraction was 150 μm and the particle size distribution thereof was 40 to 300 μm with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25° C; the shore A hardness; $H_A$ was 74, the elongation at break; EB was 320%, and the tensile strength at break; TB was 31 MPa. The glass transition temperature; Tg was -32°C.

(Example 4)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 329 g of the polycarbonate polyol and 329 g of the aromatic polyester polyol were blended, and except that the blending amount of the dispersion stabilizer [N-5741 produced by Nippon Polyurethane Industry Co., Ltd.] was 22 g, the blending amount of hexamethylene diisocyanate serving as a polyisocyanate was 249 g, and the blending amount of trimethylol propane serving as a cross-linking agent was 88 g (corresponding to the molar ratio L/P of the number of moles L of the trimethylol propane to the total number of moles P of the two polyols was equal to 2/1). The weight ratio $P_A/P_B$ of the polycarbonate polyol $P_A$ to the aromatic polyester polyol $P_B$ was 50/50. The trimethylol propane serving as a cross-linking agent was added when the concentration of the end isocyanate group reached 4.3%.

The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 68, the elongation at break; EB was 270%, and the tensile strength at break; TB was 29 MPa. The glass transition temperature; Tg was -25° C.

(Example 5)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 257 g of the polycarbonate polyol and 386 g of the aromatic polyester polyol were blended, and except that the blending amount of the dispersion stabilizer [N-5741 produced by Nippon Polyurethane Industry Co., Ltd.] was 21 g, the blending amount of hexamethylene diisocyanate serving as a polyisocyanate was 260 g, and the blending amount of trimethylol propane serving as a cross-linking agent was 92 g (corresponding to the molar ratio L/P of the number of moles L of the trimethylol propane to the total number of moles P of the two polyols was equal to 2/1). The weight ratio $P_A/P_B$ of the polycarbonate polyol $P_A$ to the aromatic polyester polyol $P_B$ was 40/60. The trimethylol propane serving as a cross-linking agent was added when the concentration of the end isocyanate group reached 4.5%.

The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 68, the elongation at break; EB was 290%, and the tensile strength at break; TB was 28 MPa. The glass transition temperature; Tg was -22°C.

(Example 6)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 189 g of the polycarbonate polyol and 441 g of the aromatic polyester polyol were blended, and except that the blending amount of the dispersion stabilizer [N-5741 produced by Nippon Polyurethane Industry Co., Ltd.] was 21 g, the blending amount of hexamethylene diisocyanate serving as a polyisocyanate was 270 g, and the blending amount of trimethylol propane serving as a cross-linking agent was 96 g (corresponding to the molar ratio L/P of the number of moles L of the trimethylol propane to the total number of moles P of the two polyols was equal to 2/1). The weight ratio $P_A/P_B$ of the polycarbonate polyol $P_A$ to the aromatic polyester polyol $P_B$ was 30/70. The trimethylol propane serving as a cross-linking agent was added when the concentration of the end isocyanate group reached 4.7%.

The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 68, the elongation at break; EB was 280%, and the tensile strength at break; TB was 27 MPa. The glass transition temperature; Tg was -18°C.

(Comparative Example 1)

As an aromatic polyester polyol, the same polyol as used in Example 2 was used. Furthermore, as an aliphatic polyester polyol, butylene glycol/adipic acid ester (number average molecular weight Mn = 2000, hydroxyl value 56) was used. Then, 1000 g of buffer particles formed of a polyurethane resin was produced in a similar way described in Example 1 except that as polyols, 269 g of the aromatic polyester polyol and 404 g of the aliphatic polyester polyol were blended, and except that the blending amount of the dispersion stabilizer [N-5741 produced by Nippon Polyurethane Industry Co., Ltd.] was 22 g, the blending amount of hexamethylene diisocyanate serving as a polyisocyanate was 238 g, and the blending amount of trimethylol propane serving as a cross-linking agent was 84 g (corresponding to the molar ratio L/P of the number of moles L of the trimethylol propane to the total number of moles P of the two polyols was equal to 2/1). The weight ratio $P_B/P_C$ of the aromatic polyester polyol $P_B$ to the aliphatic polyester polyol $P_C$ was 40/60. The trimethylol propane serving as a cross-linking agent was added when the concentration of the end isocyanate group reached 4.1%.

The average particle diameter of the buffer particles in terms of volume fraction was 150 $\mu$m and the particle

size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 65, the elongation at break; EB was 320%, and the tensile strength at break; TB was 28 MPa. The glass transition temperature; Tg was -42°C.

(Comparative Example 2)

As an aromatic polyester polyol and an aliphatic polyester polyol, the same polyols as used in Comparative Example 1 were used. Then, 1000 g of buffer particles formed of a polyurethane resin was produced in a similar way described in Example 1 except that as polyols, 107 g of the aromatic polyester polyol and 607 g of the aliphatic polyester polyol were blended, and except that the blending amount of the dispersion stabilizer [N-5741 produced by Nippon Polyurethane Industry Co., Ltd.] was 24 g, the blending amount of hexamethylene diisocyanate serving as a polyisocyanate was 207 g, and the blending amount of trimethylol propane serving as a cross-linking agent was 73 g (corresponding to the molar ratio L/P of the number of moles L of the trimethylol propane to the total number of moles P of the two polyols was equal to 2/1). The weight ratio $P_B/P_C$ of the aromatic polyester polyol $P_B$ to the aliphatic polyester polyol $P_C$ was 15/85. The trimethylol propane serving as a cross-linking agent was added when the concentration of the end isocyanate group reached 3.6%.

The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 63, the elongation at break; EB was 300%, and the tensile strength at break; TB was 25 MPa. The glass transition temperature; Tg was -47°C.

(Heat resistance test)

The buffer particles produced in Examples 1 to 6 and Comparative Examples 1 and 2 were respectively blended with the grease obtained by adding a soap thickening agent to poly (a-olefin) oil, whereby grease serving as a lubricant composition was produced. The content of the buffer particles was 5 wt% of the total amount of the lubricant composition. The grease was filled in the speed reduction gear 50 of the electric power steering apparatus shown in FIGS. 1 and 2. As the worm gear mechanism 8 of the speed reduction gear 50, the combination of the worm shaft 11 made of an iron-based metal and the worm wheel 12 of which the synthetic resin member 12b is formed of a polyamide resin was used. A backlash was 2'.

While the electric power steering apparatus was operated, the intensity (db(A)) of the noise generated when the steering wheel 1 coupled to the electric power steering apparatus was rotated was measured, and the steering torque (N·m) at that time was also measured. The measurements were carried out for two cases: when the grease obtained immediately after the production was filled in the speed reduction gear 50 (initial state) and when the grease was left at rest for 1000 hours in an oven at 120°C and then filled in the speed reduction gear 50 (after heat aging). The ratios of the changes in noise and steering torque between the initial state and the state after heat aging were obtained, and the heat resistance of the buffer particles was evaluated.

(Humidity resistance test)

The polyurethane resin sheets (approximately 2 mm in thickness) produced in Examples 1 to 6 and Comparative Examples 1 and 2 to measure the physical properties thereof were dipped in warm water at 80° C for 250 hours and 1000 hours, and then their tensile strengths at break TB were measured. Furthermore, the retention rate (%) after dipping for 250 hours and the retention rate (%) after dipping for 1000 hours were calculated in comparison with the initial value of the tensile strength at break TB before dipping in the warm water, to evaluate the humidity resistance of the buffer particles. The results are shown in Table 1.

[Table 1]

| | $P_A/P_B$ | Noise (db(A)) | | | Steering torque (N·m) | | | $H_A$ | EB (%) | Physical properties of sheet | | | Tg (°C) |
| | | Initial state | After heat aging | Ratio of change | Initial state | After heat aging | Ratio of change | | | TB | | | |
| | | | | | | | | | | Initial value (MPa) | Retention rate (%)after dipping in warm water | | |
| | | | | | | | | | | | After 250 hours | After 1000 hours | |
| Example 1 | $P_A$ only | 52.1 | 52.4 | 0.6 | 1.71 | 1.64 | -4.1 | 72 | 300 | 30 | 95 | 84 | -28 |
| Example 2 | 85/15 | 52.3 | 52.9 | 1.2 | 1.61 | 1.53 | -5.0 | 70 | 300 | 32 | 95 | 84 | -35 |
| Example 3 | 70/30 | 52.6 | 53.2 | 1.2 | 1.82 | 1.69 | -7.1 | 74 | 320 | 31 | 96 | 85 | -32 |
| Example 4 | 50/50 | 53.5 | 54.4 | 1.7 | 1.43 | 1.31 | -8.4 | 68 | 270 | 29 | 93 | 80 | -25 |
| Example 5 | 40/60 | 53.0 | 53.9 | 1.7 | 1.51 | 1.39 | -7.9 | 68 | 290 | 28 | 92 | 80 | -22 |
| Example 6 | 30/70 | 53.2 | 54.2 | 1.9 | 1.54 | 1.41 | -8.1 | 68 | 280 | 27 | 89 | 75 | -18 |
| Comparative Example 1 | - | 53.6 | 57.8 | 7.8 | 1.59 | 1.2 | -24.5 | 65 | 320 | 28 | 75 | 60 | -42 |
| Comparative Example 2 | - | 53.8 | 58.4 | 8.6 | 1.43 | 1.0 | -30.0 | 63 | 300 | 25 | 60 | 45 | -47 |

Table 1 confirms that the buffer particles of Comparative Examples 1 and 2 formed of the polyurethane resin synthesized in combination of the aromatic polyester polyol and the aliphatic polyester polyol as polyols have inadequate heat resistance and humidity resistance. On the other hand, it also confirms that the buffer particles of Example 1 formed of the polyurethane resin synthesized by using the polycarbonate polyol as a polyol, and the buffer particles of Examples 2 to 6 formed of the polyurethane resin synthesized in combination of the polycarbonate polyol and the aromatic polyester polyol as polyols have excellent heat resistance and humidity resistance. Furthermore, when the respective examples are compared, it confirms that the weight ratio $P_A/P_B$ of the polycarbonate polyol $P_A$ to the aromatic polyester polyol $P_B$ is equal to 40/60 or more are preferable in the heat resistance and humidity resistance of buffer particles.

(Modulus of elasticity test)

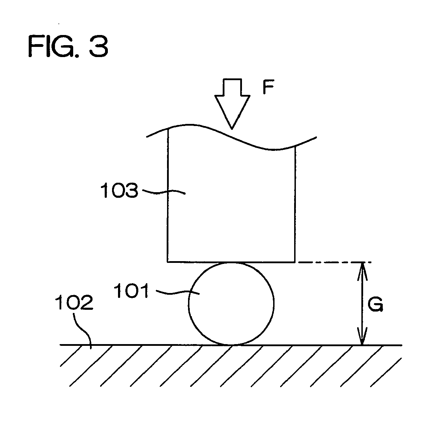

As shown in FIG. 3, the buffer particles 101 produced in Examples 2, 4 and Comparative Example 2 were each placed on the base 102 made of quartz with a flat face, and the end face of a detection rod 103 made of quartz with a flat end face was abutted with the buffer particle 101. In this state, when a constant load F was applied to the buffer particle 101 via the detection rod 103 to compress the particle toward the base 102, the distance G between the surface of the base 102 and the end face of the detection rod 103 was measured. From the result of the measurement, on the basis of Expression (1):

$$ F \; = \; (2^{1/2}/3) \cdot S^{3/2} \cdot R^{1/2} \cdot E/(1 \; - \; \nu^2) \qquad (1) $$

wherein R is the radius of the buffer particle 101 before compression, S is the compression deformation amount of the buffer particle 101 obtained according to Expression (2):

$$ S \; = \; 2R \; - \; G \qquad (2) $$

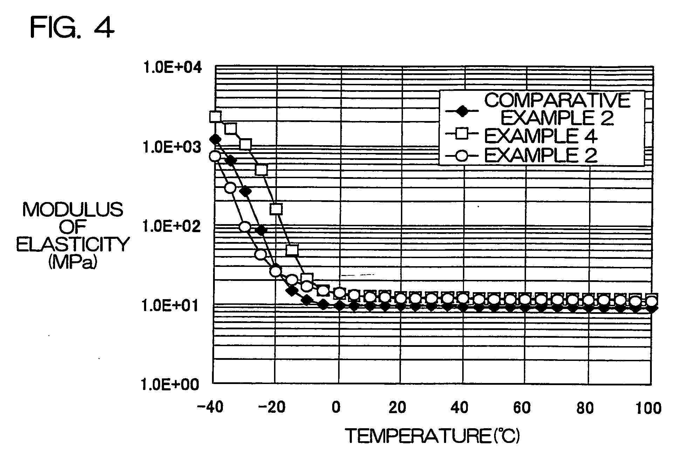

using the radius R of the buffer particle 101 and the distance G, and E is the modulus of elasticity of the buffer particle 101, and $\nu$ is the Poisson's ratio (= 0.49).
The modulus of elasticity E of the buffer particle 101 was calculated while the measurement temperature was changed from -40 to +100° C in 5° C intervals, and the change in the modulus of elasticity E of the buffer particle 101 was obtained depending on the measurement temperature. The results are shown in FIG. 4.

Referring to FIG. 4, when Example 2 in which the weight ratio $P_A/P_B$ of the polycarbonate polyol $P_A$ to the aromatic polyester polyol $P_B$ was 85/15 was compared with Example 4 in which the weight ratio $P_A/P_B$ was 50/50 and Comparative Example 2 in which the aromatic polyester polyol and the aliphatic polyester polyol were used as polyols in combination, it confirms that the modulus of elasticity was improved in the temperature range of -20° C or more and that any abrupt increase in the modulus of elasticity is suppressed under a low-temperature environment at less than the above-described temperature range. As a result, it confirms that the weight ratio $P_A/P_B$ of the polycarbonate polyol $P_A$ to the aromatic polyester polyol $P_B$ should further preferably be 80/20 or more.

(Example 7)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 741 g of the polycarbonate polyol and 131 g of the aromatic polyester polyol were blended, and except that the blending amount of the dispersion stabilizer [N-5741 produced by Nippon Polyurethane Industry Co., Ltd.] was 29 g, the blending amount of hexamethylene diisocyanate serving as a polyisocyanate was 110 g, and the blending amount of trimethylol propane serving as a cross-linking agent was 13 g (corresponding to the molar ratio L/P of the number of moles L of the trimethylol propane to the total number of moles P of the two polyols was equal to 0.3/1). The weight ratio $P_A/P_B$ of the polycarbonate polyol $P_A$ to the aromatic polyester polyol $P_B$ was 85/15. The trimethylol propane serving as a cross-linking agent was added when the concentration of the end isocyanate group reached 0.6%.
The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 62, the elongation at break; EB was 450%, and the tensile strength at break; TB was 30 MPa. The glass transition temperature; Tg was -32°C.

(Example 8)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 722 g of the polycarbonate polyol and 127 g of the aromatic polyester polyol were blended, and except that the blending amount of the dispersion stabilizer [N-5741 produced by Nippon Polyurethane Industry Co., Ltd.] was 28 g, the blending amount of hexamethylene diisocyanate serving as a polyisocyanate was 123 g, and the blending amount of trimethylol propane serving as a cross-linking agent was 22 g (corresponding to the molar ratio L/P of the number of moles L of the trimethylol propane to the total number of moles P of the two polyols was equal to 0.5/1). The weight ratio $P_A/P_B$ of the polycarbonate polyol $P_A$ to the aromatic polyester polyol $P_B$ was 85/15. The trimethylol propane serving as a cross-linking agent was added when the concentration of the end isocyanate group reached 1.0%.
The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 65, the elongation at break; EB was 420%, and the tensile strength at break; TB was 33 MPa. The glass transition temperature; Tg was -33°C.

(Example 9)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 679 g of the polycarbonate polyol and 120 g of the aromatic polyester polyol were blended, and except that the blending amount of the dispersion stabilizer [N-5741 produced by Nippon Polyurethane Industry Co., Ltd.] was 27 g, the blending amount of hexamethylene diisocyanate serving as a polyisocyanate was 155 g, and the blending amount of trimethylol propane serving as a cross-linking agent was 41 g (corresponding to the molar ratio L/P of the number of moles L of the trimethylol propane to the total number of moles P of the two polyols was equal to 1/1). The weight ratio $P_A/P_B$ of the polycarbonate polyol $P_A$ to the aromatic polyester polyol $P_B$ was 85/15. The trimethylol propane serving as a cross-linking agent was added when the concentration of the end isocyanate group reached 2.0%.
The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 68, the elongation at break; EB was 380%, and the tensile strength at break; TB was 29 MPa. The glass transition temperature; Tg was -34°C.

(Example 10)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 549 g of the polycarbonate polyol and 97 g of the aromatic polyester polyol were blended, and except that the blending amount of the dispersion stabilizer [N-5741 produced by Nippon Polyurethane Industry Co., Ltd.] was 22 g, the blending amount of hexamethylene diisocyanate serving as a polyisocyanate was 250 g, and the blending amount of trimethylol propane serving as across-linking agent was 100 g (corresponding to the molar ratio L/P of the number of moles L of the trimethylol propane to the total number of moles P of the two polyols was equal to 3/1). The weight ratio $P_A/P_B$ of the polycarbonate polyol $P_A$ to the aromatic polyester polyol $P_B$ was 85/15. The trimethylol propane serving as a cross-linking agent was added when the concentration of the end isocyanate group reached 4.9%.
The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness; $H_A$ was 72, the elongation at break; EB was 180%, and the tensile strength at break; TB was 43 MPa. The glass transition temperature; Tg was -34°C.

(Example 11)

As a polycarbonate polyol and an aromatic polyester polyol, the same polyols as used in Example 2 were used. Then, 1000 g of buffer particles formed of a polyurethane resin was produced in a similar way described in Example 1 except that as polyols, 533 g of the polycarbonate polyol and 94 g of the aromatic polyester polyol were blended, and except that the blending amount of the dispersion stabilizer [N-5741 produced by Nippon Polyurethane Industry Co., Ltd.] was 21 g, the blending amount of hexamethylene diisocyanate serving as a polyisocyanate was 261 g, and the blending amount of trimethylol propane serving as a cross-linking agent was 107 g (corresponding to the molar ratio $L/P$ of the number of moles $L$ of the trimethylol propane to the total number of moles $P$ of the two polyols was equal to 3.3/1). The weight ratio $P_A/P_B$ of the polycarbonate polyol $P_A$ to the aromatic polyester polyol $P_B$ was 85/15. The trimethylol propane serving as a cross-linking agent was added when the concentration of the end isocyanate group reached 5.3%.

The average particle diameter of the buffer particles in terms of volume fraction was 150 $\mu$m and the particle size distribution thereof was 40 to 300 $\mu$m with the laser diffraction particle size analyzer [Microtrack (registered trademark) produced by Nikkiso Co., Ltd.]. Furthermore, the physical properties of the polyurethane resin sheet (approximately 2 mm in thickness) produced in a similar way described above by applying the same blend excluding the dispersion stabilizer were measured at a measurement temperature of 25°C; the shore A hardness ; $H_A$ was 73, and the elongation at break; EB was 130% and the tensile strength at break; TB was 45 MPa. The glass transition temperature; Tg was -32°C.

The buffer particles produced in Examples 7 to 11 were subjected to the heat resistance test and humidity resistance test, and their physical properties were also evaluated. The results are shown in Table 2, together with the results of Example 2.

[Table 2]

| | L/P | Noise (db(A)) | | | Steering torque (N·m) | | | Physical properties of sheet | | | | | |
| | | Initial state | After heat aging | Ratio of change | Initial state | After heat aging | Ratio of change | $H_A$ | EB (%) | TB | | | Tg (°C) |
| | | | | | | | | | | Initial value (MPa) | Retention rate (%) after dipping in warm water | | |
| | | | | | | | | | | | After 250 hours | After 1000 hours | |
| Example 7 | 0.3/1 | 55.2 | 56.5 | 2.4 | 1.10 | 0.96 | -12.7 | 62 | 450 | 30 | 85 | 75 | -32 |
| Example 8 | 0.5/1 | 54.4 | 55.4 | 1.8 | 1.24 | 1.11 | -10.5 | 65 | 420 | 33 | 90 | 82 | -33 |
| Example 9 | 1/1 | 52.9 | 53.7 | 1.5 | 1.50 | 1.39 | -7.3 | 68 | 380 | 29 | 92 | 85 | -34 |
| Example 2 | 2/1 | 52.3 | 52.9 | 1.2 | 1.61 | 1.53 | -5.0 | 70 | 300 | 32 | 95 | 84 | -35 |
| Example 10 | 3/1 | 51.8 | 52.3 | 1.0 | 2.04 | 1.95 | -4.4 | 72 | 180 | 43 | 96 | 88 | -34 |
| Example 11 | 3.3/1 | 51.0 | 51.5 | 0.9 | 3.18 | 3.06 | -3.7 | 73 | 130 | 45 | 96 | 86 | -32 |

Table 2 confirms that the buffer particles of Examples 2 and 7 to 11 formed of the polyurethane resin synthesized in combination of the polycarbonate polyol and the aromatic polyester polyol as polyols, have excellent heat resistance and humidity resistance. In addition, when the respective examples are compared, it confirms that the cross-linking agent L and the polyol P should preferably be blended in a molar ratio L/P of 0.5/1 to 3/1 to impart appropriate elasticity and hardness for the buffer particles.

**Claims**

1. A lubricant composition comprising a lubricant and buffer particles formed of a polyurethane resin synthesized by the reaction of:

   (1) polyols containing at least a polycarbonate polyol,
   (2) a cross-linking agent having three or more active hydrogen groups per molecule, and
   (3) a polyisocyanate.

2. The lubricant composition according to Claim 1, wherein a polycarbonate polyol and an aromatic polyester polyol are used in combination as polyols serving as raw materials of the polyurethane resin, and a weight ratio $P_A/P_B$ of the polycarbonate polyol $P_A$ to the aromatic polyester polyol $P_B$ is 40/60 or more.

3. The lubricant composition according to Claim 1, wherein all the polyols containing the polycarbonate polyol are long-chain polyols having a number average molecular weight of 500 or more.

4. The lubricant composition according to Claim 1, wherein the cross-linking agent L and the polyol P serving as raw materials of the polyurethane resin are blended at a molar ratio L/P of 0.5/1 to 3/1.

5. The lubricant composition according to Claim 1, wherein the buffer particles are spherical particles of the polyurethane resin formed by reacting the polyols, the cross-linking agent and the polyisocyanate dispersed in a nonaqueous dispersion medium.

6. A speed reduction gear comprising a small gear and a large gear, wherein a region including an engaging portion of the both gears is filled with the lubricant composition of Claim 1.

7. An electric power steering apparatus configured to transmit an output of an electric motor for steering assist to a steering mechanism by reducing its speed through the speed reduction gear of Claim 6.

# FIG. 1

FIG. 2

FIG. 3

FIG. 4

EP 1 959 004 A1

**INTERNATIONAL SEARCH REPORT**

| International application No. |
|---|
| PCT/JP2006/322968 |

A. CLASSIFICATION OF SUBJECT MATTER
*C10M169/04*(2006.01)i, *B62D5/04*(2006.01)i, *C10M149/14*(2006.01)i, *F16H57/04*
(2006.01)i, *C10N20/06*(2006.01)n, *C10N30/00*(2006.01)n, *C10N30/08*(2006.01)n,
*C10N40/04*(2006.01)n, *C10N50/10*(2006.01)n, *C10N70/00*(2006.01)n
According to International Patent Classification (IPC) or to both national classification and IPC

B. FIELDS SEARCHED

Minimum documentation searched (classification system followed by classification symbols)
C10M169/04, B62D5/04, C10M149/14, F16H57/04, C10N20/06, C10N30/00,
C10N30/08, C10N40/04, C10N50/10, C10N70/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-263989 A (Koyo Seiko Co., Ltd.), 29 September, 2005 (29.09.05), Full text & EP 1580256 A1 & US 2005/205341 A1 | 1-7 |
| Y A | JP 2000-302835 A (Nippon Polyurethane Industry Co., Ltd.), 31 October, 2000 (31.10.00), Full text & JP 2001-87692 A & JP 2001-149848 A & EP 1052182 A2 & US 2002/56726 A1 & US 2003/89736 A1 & US 2003/91773 A1 | 2 1,3-7 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 February, 2007 (02.02.07) | 13 February, 2007 (13.02.07) |

| Name and mailing address of the ISA/ Japanese Patent Office | Authorized officer |
|---|---|
| Facsimile No. | Telephone No. |

Form PCT/ISA/210 (second sheet) (April 2005)

23

**INTERNATIONAL SEARCH REPORT**

| International application No. |
| --- |
| PCT/JP2006/322968 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2001-55437 A (Nippon Polyurethane Industry Co., Ltd.), 27 February, 2001 (27.02.01), Full text (Family: none) | 2<br>1,3-7 |
| A | JP 11-286601 A (Nippon Polyurethane Industry Co., Ltd.), 19 October, 1999 (19.10.99), (Family: none) | 1-7 |
| A | WO 2004/29184 A1 (Koyo Seiko Co., Ltd.), 08 April, 2004 (08.04.04), & JP 2004-162018 A & EP 1544280 A1 & US 2006/58201 A1 | 1-7 |

Form PCT/ISA/210 (continuation of second sheet) (April 2005)

**EP 1 959 004 A1**

## REFERENCES CITED IN THE DESCRIPTION

**Patent documents cited in the description**

- JP 2000043739 A
- JP 2003214529 A
- JP 2004162018 A
- JP 2005263989 A